# EUROPEAN PATENT APPLICATION

(11) **EP 1 262 968 A2**
(43) Date of publication of application: **04.12.2002**
(21) Application number: 02011852.7
(22) Date of filing: 28.05.2002
(51) Int. Cl.: G11B 20/00

(54) **Method of managing the copying of contents-representing data**

(30) Priority: 31.05.2001 JP 2001165605; 31.05.2001 JP 2001165608
(71) Applicant: Victor Company of Japan, Ltd., Yokohama 221-0022 (JP)
(72) Inventor: Shikunami, Juichi, Miura-gun, Kanagawa-ken (JP); Fuchigami, Norihiko, Kamakura-shi, Kanagawa-ken (JP)
(74) Representative: Casalonga, Axel

(57) **Abstract**

In a method of managing the copying of data representing contents, contents and a copyright number given from a copyright holder to the user regarding the contents are sent to a user as virtual contents files whose number is equal to the copyright number. In cases where the user copies the contents from a source recording medium to a destination recording medium, the virtual contents files are moved from the source recording medium and are erased therefrom.

## Description

### BACKGROUND OF THE INVENTION

### Field of the Invention

This invention relates to a method of managing the copying of data representing, for example, audio contents or music contents. In addition, this invention relates to a recording and reproducing apparatus provided with the function of managing the copying of contents-representing data. Furthermore, this invention relates to a reproducing apparatus provided with the function of managing the copying of contents-representing data. Also, this invention relates to a copy management system.

### Description of the Related Art

An electronic music distribution (EMD) system sends compressed audio data to users in a manner such that the copyright on the contents of the audio data can be protected. The EMD system conforms to the copyright protection standards proposed by SDMI (Secure Digital Music Initiative). According to the SDMI standards, copying and moving audio data representative of music contents are controlled on the basis of digital right information indicating usage rules and appended to the contents. In an example of the contents-data copying/moving control, for each set of the contents, up to three first-generation copies thereof are permitted. Generating a copy or copies of contents data from a source is referred to as checkout. The number of copies permitted decreases as the number of copies which have been made increases. When a copy or copies are returned to a copy source, the number of copies permitted is increased back to the previous number. The return of a copy or copies to a copy source is referred to as check-in. The copy control via checkout and check-in causes at most three copies to be present. The parent side (the hotel side) with respect to checkout and check-in is referred to as an LCM (license compliant module), and the child side (the customer side) with respect thereto is referred to as PM (portable media) or a portable device.

The above-mentioned related-art method of controlling the copying and moving of contents-representing data is inconvenient in some points.

### SUMMARY OF THE INVENTION

It is a first object of this invention to provide an improved method of managing the copying of contents-representing data.

It is a second object of this invention to provide an improved recording and reproducing apparatus.

It is a third object of this invention to provide an improved reproducing apparatus.

It is a fourth object of this invention to provide an improved copy management system.

A first aspect of this invention provides a method of managing the copying of data representing contents. The method comprises the steps of sending, to a user, contents and a copyright number given from a copyright holder to the user regarding the contents as virtual contents files whose number is equal to the copyright number; and in cases where the user copies the contents from a source recording medium to a destination recording medium, moving the virtual contents files from the source recording medium and erasing the virtual contents files from the source recording medium.

A second aspect of this invention provides a method of managing the copying of data representing contents. The method comprises the steps of sending, to a user, contents and a copyright number given from a copyright holder to the user regarding the contents; and in cases where the user copies the contents from a source recording medium to a destination recording medium, moving the virtual contents files and the copyright number from the source recording medium as virtual contents files whose number is equal to the copyright number, and erasing the virtual contents files from the source recording medium.

A third aspect of this invention is based on the first aspect thereof, and provides a method wherein the moving step comprises decrementing a copyright number in the source recording medium, and incrementing a copyright number in the destination recording medium.

A fourth aspect of this invention provides a recording and reproducing apparatus comprising means for moving a set of contents from a source recording medium to a destination recording medium as virtual contents files whose number is equal to a copyright number given from a copyright holder to a user; means for erasing the virtual contents files from the source recording medium; and means for changing the copyright number in accordance with a direction of moving the virtual contents files and a number of the moved virtual contents files.

A fifth aspect of this invention is based on the fourth aspect thereof, and provides a recording and reproducing apparatus which comprises a server for copying the set of contents onto another recording medium.

A sixth aspect of this invention is based on the fourth aspect thereof, and provides a recording and reproducing apparatus which comprises a portable recording medium.

A seventh aspect of this invention is based on the fourth aspect thereof, and provides a recording and reproducing apparatus which comprises an apparatus for recording and reproducing information on and from an optical disc.

An eighth aspect of this invention provides a reproducing apparatus comprising means for moving a set of contents from a source recording medium to a destination recording medium as virtual contents files whose number is equal to a copyright number given from a copyright holder to a user; means for erasing the virtual contents files from the source recording medium; and means for inhibiting playback of contents related to the virtual contents files when the copyright number is equal to 0.

A ninth aspect of this invention provides a method of managing the copying of data representing contents. The method comprises the steps of sending, to a user, (1) first contents, (2) an ID of the first contents, and (3) a copyright number given from a copyright holder to the user regarding the first contents as virtual contents files whose number is equal to the copyright number; in cases where the user copies the first contents from a source recording medium to a destination recording medium, collating the ID of the first contents with an ID of second contents already recorded on the destination recording medium; when the ID of the first contents is different from the ID of the second contents, moving the first contents, the ID of the first contents, and the copyright number; and when the ID of the first contents is equal to the ID of the second contents, incrementing a copyright number in the destination recording medium without moving the first contents to move and erase the virtual contents files from the source recording medium.

A tenth aspect of this invention is based on the ninth aspect thereof, and provides a method further comprising the step of, in cases where the first contents lacks an ID, adding an ID to the first contents and recording the ID-added first contents on the destination recording medium.

An eleventh aspect of this invention is based on the ninth aspect thereof, and provides a method further comprising the steps of recording a list of IDs of recorded contents on the destination recording medium; and collating the ID of the first contents with the IDs in the list at a time of copying.

A twelfth aspect of this invention provides a recording and reproducing apparatus comprising means for sending, to a user, (1) first contents, (2) an ID of the first contents, and (3) a copyright number given from a copyright holder to the user regarding the first contents as virtual contents files whose number is equal to the copyright number; means for, in cases where the user copies the first contents from a source recording medium to a destination recording medium, collating the ID of the first contents with an ID of second contents already recorded on the destination recording medium; means for, when the ID of the first contents is different from the ID of the second contents, moving the first contents, the ID of the first contents, and the copyright number; and means for, when the ID of the first contents is equal to the ID of the second contents, incrementing a copyright number in the destination recording medium without moving the first contents to move and erase the virtual contents files from the source recording medium.

A thirteenth aspect of this invention is based on the twelfth aspect thereof, and provides a recording and reproducing apparatus further comprising means for, in cases where the first contents lacks an ID, adding an ID to the first contents and recording the ID-added first contents on the destination recording medium.

A fourteenth aspect of this invention is based on the twelfth aspect thereof, and provides a recording and reproducing apparatus further comprising means for recording a list of IDs of recorded contents on the destination recording medium; and means for collating the ID of the first contents with the IDs in the list at a time of copying.

A fifteenth aspect of this invention is based on the twelfth aspect thereof, and provides a recording and reproducing apparatus wherein the destination recording medium comprises an optical disc.

A sixteenth aspect of this invention provides a copy management system comprising first means for reading out an identification signal from a file in a source recording medium; second means for reading out an identification signal from a file in a destination recording medium; third means for deciding whether or not the identification signal read out by the first means and the identification signal read out by the second means are equal; fourth means for, when the third means decides that the identification signal read out by the first means and the identification signal read out by the second means are equal, decrementing a copy permission number in the file in the source recording medium by a predetermined number and incrementing a copy permission number in the file in the destination recording medium by the predetermined number; fifth means for inhibiting read-out of the file from the source recording medium when the copy permission number in the file in the source recording medium is equal to 0; and sixth means for inhibiting read-out of the file from the destination recording medium when the copy permission number in the file in the destination recording medium is equal to 0.

A seventeenth aspect of this invention is based on the sixteenth aspect thereof, and provides a copy management system further comprising seventh means for, when the third means decides that the identification signal read out by the first means and the identification signal read out by the second means are not equal, copying the file except the copy permission number from the source recording medium onto the destination recording medium to record a copy file on the destination recording medium; eighth means for, in cases where the seventh means executes the copying, decrementing the copy permission number in the file in the source recording medium by a preset number; and ninth means for, in cases where the seventh means executes the copying, setting a copy permission number in the copy file in the destination recording medium to the preset number.

### BRIEF DESCRIPTION OF THE DRAWINGS

Fig. 1 is a diagram of a related-art system.
Figs. 2, 3, 4, 5, and 6 are diagrams of different conditions of files in recording mediums.
Fig. 7 is a diagram of copying-related conditions in a copy management system according to a first embodiment of this invention.
Fig. 8 is a diagram of the structure of one actual file of contents-representing data.
Fig. 9 is a block diagram of an example of a recording and reproducing apparatus in Fig. 7.
Figs. 10 and 11 are a flow diagram of operation of the copy management system in Fig. 7.
Fig. 12 is a flowchart of a first segment of a control program in a second embodiment of this invention.
Fig. 13 is a flowchart of a second segment of the control program in the second embodiment of this invention.

### DETAILED DESCRIPTION OF THE INVENTION

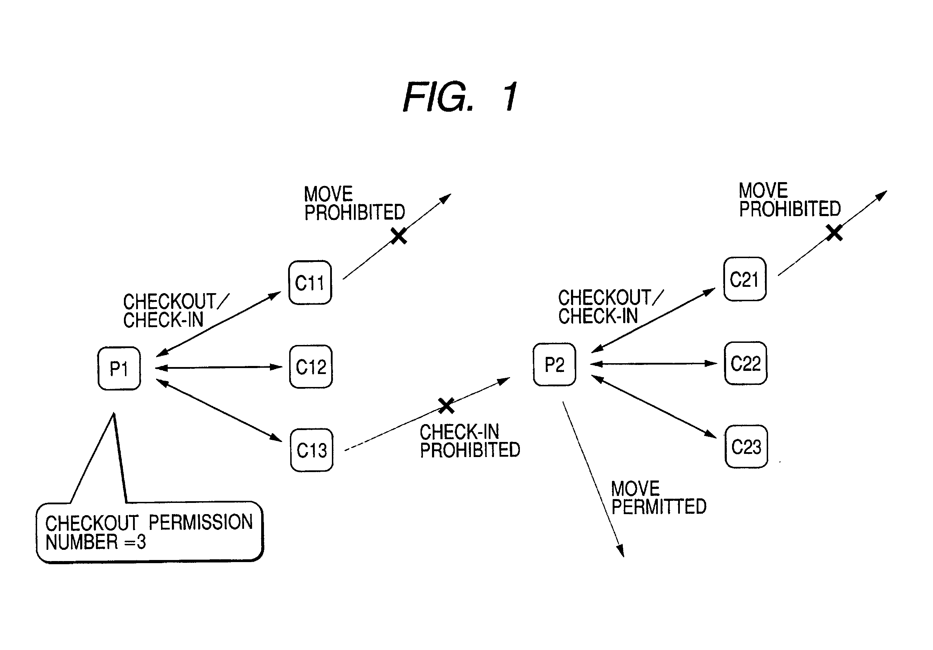

A related-art system conforming to the SDMI standards will be explained below for a better understanding of this invention. Fig. 1 shows the related-art system which includes parent recording mediums (server recording mediums) P1 and P2 loaded with contents-representing data. Each of the parent recording mediums P1 and P2 is, for example, a hard disc in a personal computer.

In the related-art system of Fig. 1, the contents-representing data are permitted to be copied from the parent recording medium P1 onto at most three child recording mediums C11, C12, and C13. Similarly, the contents-representing data are permitted to be copied from the parent recording medium P2 onto at most three child recording mediums C21, C22, and C23. Thus, up to three first-generation copies of the contents-representing data stored in each of the parent recording mediums P1 and P2 are permitted. The copying of contents-representing data from a parent recording medium onto a child recording medium is referred to as check-out. The check-out permission number, that is, the number of permitted child recording mediums, is equal to 3 for each parent recording medium. Each of the child recording mediums C11-C13 and C21-C23 is, for example, a portable recording medium or a recording medium within a portable device.

The contents-representing data can be returned from each of the child recording mediums C11-C13 to the parent recording medium P1 while being erased therefrom. Similarly, the contents-representing data can be returned from each of the child recording mediums C21-C23 to the parent recording medium P2 while being erased therefrom. The return of contents-representing data from a child recording medium to a parent recording medium is referred to as check-in.

The related-art system of Fig. 1 prohibits copying or moving the contents-representing data from each of the child recording mediums C11-C13 and C21-C23 to another recording medium other than the parent recording medium P1 or P2. Thus, second-generation copies of the contents-representing data stored in each of the parent recording mediums P1 and P2 are prohibited. The related-art system of Fig. 1 is designed so that check-in from each of the child recording medium C11-C13 to the unrelated parent recording medium P2 can not be executed, and also check-in from each of the child recording medium C21-C23 to the unrelated parent recording medium P1 can not be executed.

In the related-art system of Fig. 1, regarding checkout, authentication is implemented between a copy source and a copy destination to enable the copy source to decide whether or not the copy destination is based on the SDMI copyright protection scheme. When it is decided that the copy destination is not based on the SDMI copyright protection scheme, the copy source fails to execute checkout toward the copy destination.

It is possible to move the contents-representing data from the parent recording medium P1 to a child recording medium C11, C12, or C13. Also, it is possible to move the contents-representing data from the parent recording medium P2 to a child recording medium C21, C22, or C23. In the case of "move", the contents-representing data are erased from the parent recording medium P1 or P2 (a move source).

The related-art system of Fig. 1 is inconvenient in points as follows. Check-in from a child recording medium to an unrelated parent recording medium can not be executed. Before the execution of check-in from a child recording medium, it is necessary to identify a corresponding parent recording medium. Moving contents-representing data from a child recording medium to another recording medium other than a corresponding parent recording medium is prohibited. Checkout can be done only from a parent recording medium.

### First Embodiment

A copy management system in a first embodiment of this invention includes a first recording medium and a second recording medium. The first recording medium is also referred to as the source recording medium. The second recording medium is also referred to as the destination recording medium. The first recording medium stores an actual file of contents-representing data per music tune. Each actual file includes main data and copyright management information which form corresponding portions of the contents-representing data. The main data represents related music contents. The copyright management information includes an identification signal (ID) of related music contents and a signal indicative of a copyright number (a copy permission number).

In the case where an actual file is requested to be copied from the first recording medium onto the second recording medium, a copyright number is read out from the requested actual file. A decision is made as to whether or not the read-out copyright number is equal to 0. When the read-out copyright number is equal to 0, the copying of the requested actual file is prohibited. Otherwise, the following operation steps are implemented. A check is made as to whether or not the second recording medium stores at least one actual file. When the second recording medium does not store any actual file, the requested actual file except the copyright-number signal is copied from the first recording medium onto the second recording medium. In other words, the requested actual file except the copyright-number signal is transmitted from the first recording medium to the second recording medium while the requested actual file remains in the first recording medium. At this time, the copyright number indicated by the actual file in the first recording medium is decremented by "P" where "P" denotes an integer equal to 1 or greater which can be set by a user. A signal indicative of a copyright number of "P" is recorded in the copy actual file in the second recording medium to complete the copy actual file.

When the result of the previously-indicated check on the second recording medium shows that the second recording medium stores one actual file, the ID is read out from the actual file in the first recording medium and also the ID is read out from the actual file in the second recording medium. The two read-out IDs are compared. When the two read-out IDs are different, the requested actual file except the copyright-number signal is copied from the first recording medium onto the second recording medium. At this time, the copyright number indicated by the actual file in the first recording medium is decremented by "P". A signal indicative of a copyright number of "P" is recorded in the copy actual file in the second recording medium to complete the copy actual file. On the other hand, when the two read-out IDs are the same, the requested actual file is not transmitted from the first recording medium to the second recording medium. Instead, the copyright number indicated by the actual file in the first recording medium is decremented by "P" and the copyright number indicated by the actual file in the second recording medium is incremented by "P". The decrement and increment of the copyright numbers are regarded as movement of a virtual file or files corresponding to the requested actual file from the first recording medium to the second recording medium. The number of the virtual files is equal to "P". In general, the decrement of a copyright number to 0 corresponds to the erasure of a related virtual file from a recording medium of interest.

When the result of the previously-indicated check on the second recording medium shows that the second recording medium stores two or more actual files, the ID is read out from the actual file in the first recording medium and also the IDs are read out from the actual files in the second recording medium. The ID read out from the first recording medium is compared with the IDs read out from the second recording medium. When the ID read out from the first recording medium is identical with none of the IDs read out from the second recording medium, the requested actual file except the copyright-number signal is copied from the first recording medium onto the second recording medium. At this time, the copyright number indicated by the actual file in the first recording medium is decremented by "P". A signal indicative of a copyright number of "P" is recorded in the copy actual file in the second recording medium to complete the copy actual file. On the other hand, when the ID read out from the first recording medium is the same as one of the IDs read out from the second recording medium, the requested actual file is not transmitted from the first recording medium to the second recording medium. Instead, the copyright number indicated by the requested actual file in the first recording medium is decremented by "P" and the copyright number indicated by the same actual file in the second recording medium is incremented by "P". The decrement and increment of the copyright numbers are regarded as movement of a virtual file or files corresponding to the requested actual file from the first recording medium to the second recording medium.

The copy management system in the first embodiment of this invention is designed so that a copyright holder sets a copyright number defined as equal to the number of permitted copies of related copyrighted contents which are given to a user, and virtual files whose number is the same as the copyright number are provided. The virtual files relate to the copyrighted contents. A virtual file or files are moved instead of copying contents-representing data. In an exemplary case where a contents provider intends to send data representative of a set of contents and a signal representative of a copyright number of 4 to a user, 4 virtual files related to the same contents are sent to the user. In the case where a source recording medium and a destination recording medium store same contents-representing data, when a user requests the copying of the contents-representing data from the source recording medium onto the destination recording medium, a copy source decrements a related copyright number and a copy destination increments a related copyright number so that a virtual file is considered to be moved instead of actual movement of the contents-representing data. In the case of the copying of contents-representing data having a copyright number of 1, one virtual file is moved and erased from a copy source. In this case, the copyright number in the copy source is decremented from 1 to 0. A copyright number of 0 causes the prohibition of playing back contents and also moving them.

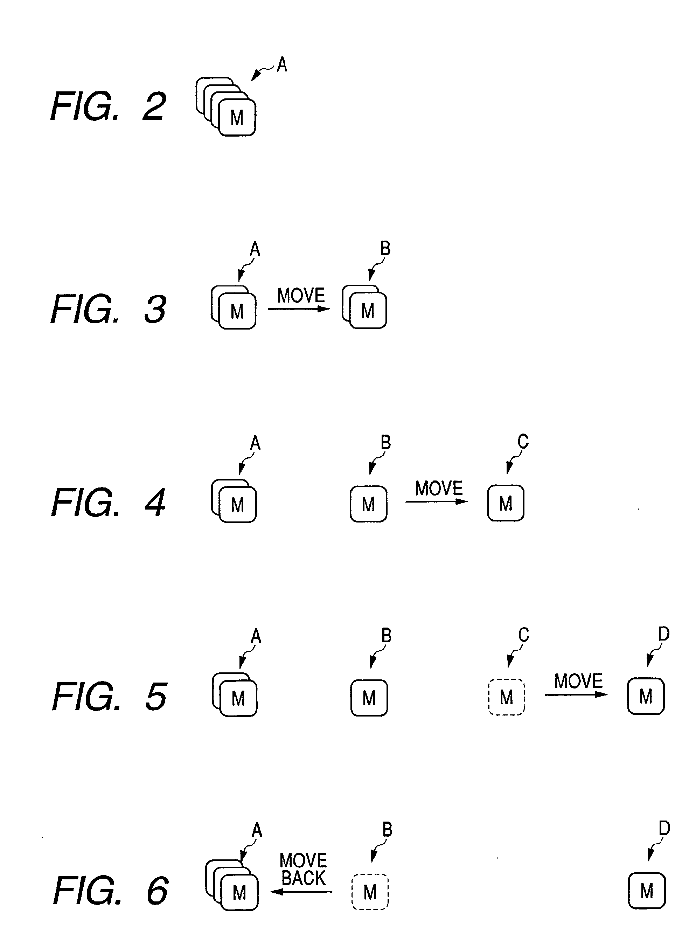

Fig. 2 shows conditions where contents-representing data having a copyright number of 4 are sent to and recorded on a recording medium "A" so that 4 virtual files "M" related to the same contents-representing data are stored in the recording medium "A".

Fig. 3 shows conditions which follow the conditions of Fig. 2. In the conditions of Fig. 3, concerning the contents-representing data having a copyright number of 4 which are recorded on the recording medium "A", the contents-representing data having a copyright number of 2 are copied onto a recording medium "B". In this case, two virtual files "M" are moved from the recording medium "A" to the recording medium "B". As a result, two virtual files "M" remain in the recording medium "A", and two virtual files "M" are stored in the recording medium "B". Two virtual files "M" mean contents-representing data having a copyright number of 2.

Fig. 4 shows conditions which follow the conditions of Fig. 3. In the conditions of Fig. 4, concerning the contents-representing data having a copyright number of 2 which are recorded on the recording medium "B", the contents-representing data having a copyright number of 1 are copied onto a recording medium "C". In this case, one virtual file "M" is moved from the recording medium "B" to the recording medium "C". As a result, one virtual file "M" remains in the recording medium "B", and one virtual file "M" is stored in the recording medium "C". One virtual file "M" means contents-representing data having a copyright number of 1.

Fig. 5 shows conditions which follow the conditions of Fig. 4. In the conditions of Fig. 5, the contents-representing data having a copyright number of 1 are copied from the recording medium "C" onto a recording medium "D". In this case, one virtual file "M" is moved from the recording medium "C" to the recording medium "D". As a result, the virtual file "M" is erased from the recording medium "C", and the copyright number in the recording medium "C" is decremented to 0. Thus, playing back contents on the recording medium "C" and also moving contents from the recording medium "C" are prohibited. On the other hand, one virtual file "M" is stored in the recording medium "D".

Fig. 6 shows conditions which follow the conditions of Fig. 5. In the conditions of Fig. 6, the contents-representing data having a copyright number of 1 are returned from the recording medium "B" to the recording medium "A". In this case, one virtual file "M" is moved from the recording medium "B" to the recording medium "A". As a result, the virtual file "M" is erased from the recording medium "B", and the copyright number in the recording medium "B" is decremented to 0. Thus, playing back contents on the recording medium "B" and also moving contents from the recording medium "B" are prohibited. On the other hand, the copyright number in the recording medium "A" is incremented from 2 to 3, and three virtual files "M" are stored in the recording medium "A".

Apparatuses provided with the recording mediums "A", "B", "C", and "D" are designed to implement the following procedure. In the case where contents-representing data are requested to be copied from a recording medium in one apparatus to a recording medium in another apparatus, the two apparatuses implement mutual authentication to confirm that they conform to the SDMI copyright protection standards. Only when the results of the mutual authentication are positive, the copying of contents-representing data between the recording mediums in the two apparatuses is carried out. Accordingly, the copy management system in the first embodiment of this invention observes the rules established by the SDMI copyright protection standards.

Alternatively, the recording mediums "A", "B", "C", and "D" may be designed to implement the following procedure. In the case where contents-representing data are requested to be copied from a recording medium to another recording medium, the two recording mediums implement mutual authentication to confirm that they conform to the SDMI copyright protection standards. Only when the results of the mutual authentication are positive, the copying of contents-representing data between the recording mediums is carried out.

An identification (ID) signal is assigned to every data representative of one set of contents. The identification signal varies from contents-set to contents-set (that is, from music tune to music tune). The identification signal is also referred to as the ID or the contents ID. In the case where the copying of data representative of a set of contents from a recording medium onto another recording medium is requested, an ID assigned to the contents-representing data in question is collated with an ID (or IDs) of contents-representing data already recorded on the copy-destination recording medium. When the ID of the contents-representing data in question disagrees with the ID of the contents-representing data recorded on the copy-destination recording medium, the contents-representing data in question and its ID are moved from the copy-source recording medium to the copy-destination recording medium. On the other hand, when the ID of the contents-representing data in question agrees with the ID of the contents-representing data recorded on the copy-destination recording medium, the contents-representing data in question and its ID are not moved and the copyright numbers in the copy-source recording medium and the copy-destination recording medium are decremented and incremented respectively to move a virtual file related to the contents-representing data in question therebetween. The decrement of the copyright number in the copy-source recording medium means the erasure of one virtual related to the contents-representing data in question therefrom.

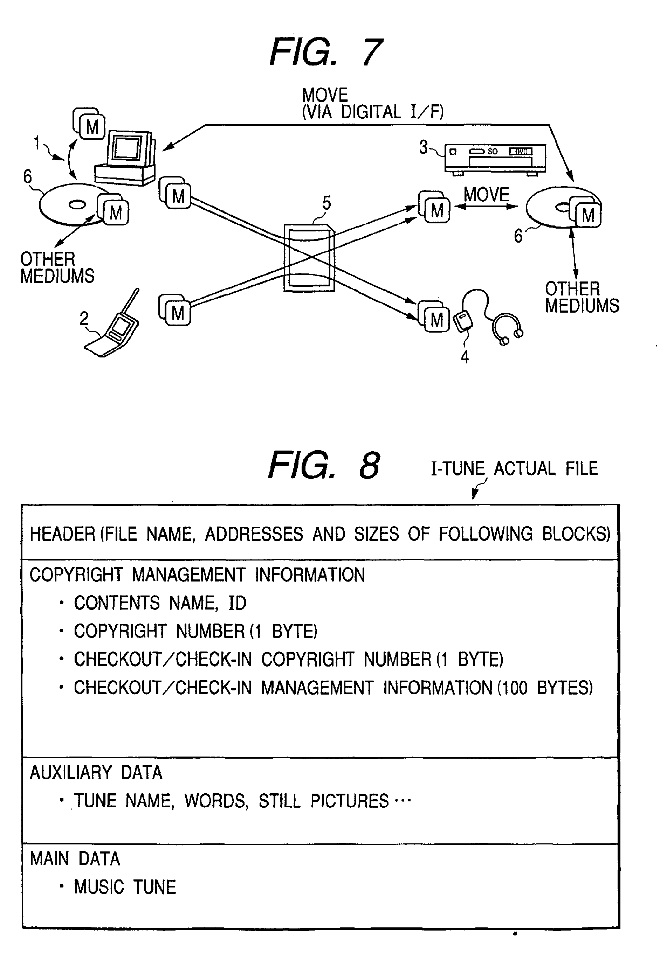

Fig. 7 shows copying-related conditions where a user moves virtual files "M". A contents provider has a large-capacity server storing data representative of sets of music contents (tunes) which are accompanied by copyright management information including contents IDs and also signals indicating copyright numbers (copy permission numbers) "N" for the respective sets of music contents.

With reference to Fig. 7, a personal computer 1 owned by a user can receive data representative of a set of music contents (a tune) and also related copyright management information from the server in the contents provider via the Internet. The personal computer 1 stores the received contents-representing data into the recording medium within a hard disc drive therein. The contents-representing data include the copyright management information. The stored copyright management information has a signal indicating the copyright number "N" for the stored contents-representing data. The copyright number "N" can be decided one-sidedly by the copyright holder related to the contents-representing data. The copyright number "N" may be set to an integer in the range of 1 to 4 in accordance with a charge paid by a user. The personal computer 1 is provided with an interface for accessing a portable recording medium 5. An example of the portable recording medium 5 includes a flash memory. The personal computer 1 is provided with a drive for an optical disc 6. The personal computer 1 has a sound section including loudspeakers. Furthermore, the personal computer 1 is provided with a display. Also, the personal computer 1 includes a keyboard and a mouse which can be operated by the user. In addition, the personal computer 1 includes a digital interface for wire or wireless communications with another apparatus or device.

The personal computer 1 operates in accordance with a control program stored in an internal RAM or the recording medium within the hard disc drive. The control program is designed to enable the personal computer 1 to implement operation steps mentioned later. The internal RAM in the personal computer 1 includes a semiconductor memory.

In general, data representative of toll contents result from encrypting original contents-representing data. When a user purchases encryption-resultant data representative of a set of toll contents, the user receives a key to decrypt the encryption-resultant data. A signal indicating a copyright number "N" is placed in an information area and a recording-medium area which can be neither accessed nor altered by a user. As previously mentioned, a user receives data representative of a set of contents and also related copyright management information via the personal computer 1, and the received contents-representing data including the copyright management information are stored in the recording medium within the hard disc drive in the personal computer 1. Under the condition that the number of copied recording mediums (copy-destination recording mediums) is within the range defined by the copyright number "N", the user is permitted to copy the contents-representing data from the recording medium within the hard disc drive in the personal computer 1 to a portable recording medium 5 or an optical disc 6. Specifically, the user is permitted to move a virtual file or files from the recording medium within the hard disc drive in the personal computer 1 to the portable recording medium 5 or the optical disc 6. As previously mentioned, an example of the portable recording medium 5 includes a flash memory. Furthermore, the user is permitted to copy the contents-representing data from the portable recording medium 5 or the optical disc 6 onto another recording medium, and to copy the contents-representing data therefrom onto a still another recording medium.

With reference to Fig. 7, a mobile telephone device 2 owned by the user has an internal memory and also an interface for accessing a portable recording medium 5. The mobile telephone device 2 can receive data representative of a set of music contents (a tune) and also related copyright management information from the server in the contents provider via a mobile telephone network including a base station. The mobile telephone device 2 stores the received contents-representing data into the internal memory or the portable recording medium 5. The contents-representing data include the copyright management information. The mobile telephone device 2 includes an array of keys or buttons which can be operated by the user. Also, the mobile telephone device 2 includes a display. The mobile telephone device 2 has a sound section including a loudspeaker. In addition, the mobile telephone device 2 includes a digital interface for wire or wireless communications with another device or apparatus.

The mobile telephone device 2 includes a microcomputer, a CPU, a digital signal processor, or a similar device having a combination of an input/output port, a processing section, a RAM (a semiconductor memory), and a ROM. The mobile telephone device 2 operates in accordance with a control program stored in the ROM or the RAM. The control program is designed to enable the mobile telephone device 2 to implement operation steps mentioned later.

In Fig. 7, a recording and reproducing apparatus 3 has a body formed with an opening into which a portable recording medium 5 can be inserted. The recording and reproducing apparatus 3 is provided with an interface for accessing the portable recording medium 5 in position with respect to the apparatus body. The recording and reproducing apparatus 3 is provided with a drive for an optical disc 6. Under the condition that the number of copied recording mediums (copy-destination recording mediums) is within the range defined by the copyright number "N", contents-representing data can be bidirectionally copied and re-copied between the portable recording medium 5 and the optical disc 6 via the recording and reproducing apparatus 3. The recording and reproducing apparatus 3 is provided with buttons which can be operated by a user. The buttons include a recording button and a playback button. Also, the recording and reproducing apparatus 3 includes a display. In addition, the recording and reproducing apparatus 3 includes a digital interface for wire or wireless communications with another apparatus or device. A display-added audio apparatus can be connected with the recording and reproducing apparatus 3.

The recording and reproducing apparatus 3 includes a microcomputer, a CPU, a digital signal processor, or a similar device having a combination of an input/output port, a processing section, a RAM (a semiconductor memory), and a ROM. The recording and reproducing apparatus 3 operates in accordance with a control program stored in the ROM or the RAM. The control program is designed to enable the recording and reproducing apparatus 3 to implement operation steps mentioned later.

In Fig. 7, a portable recording and reproducing device 4 has a body formed with an opening into which a portable recording medium 5 can be inserted. The portable recording and reproducing device 4 has an interface for accessing the portable recording medium 5 in position with respect to the device body. The portable recording and reproducing device 4 can play back contents represented by data copied and recorded on the portable recording medium 5. The portable recording and reproducing device 4 is provided with keys or buttons which can be operated by a user. The keys or buttons include a recording button and a playback button. Also, the portable recording and reproducing device 4 includes a display. In addition, the portable recording and reproducing device 4 includes a digital interface for wire or wireless communications with another device or apparatus. The portable recording and reproducing device 4 has a sound section with which headphones can be connected.

The portable recording and reproducing device 4 includes a microcomputer, a CPU, a digital signal processor, or a similar device having a combination of an input/output port, a processing section, a RAM (a semiconductor memory), and a ROM. The portable recording and reproducing device 4 operates in accordance with a control program stored in the ROM or the RAM. The control program is designed to enable the portable recording and reproducing device 4 to implement operation steps mentioned later.

A portable recording medium 5 or an optical disc 6 can be moved among the personal computer 1, the mobile telephone device 2, the recording and reproducing apparatus 3, and the portable recording and reproducing device 4 before contents represented by data recorded on the portable recording medium 5 of the optical disc 6 are played back.

As previously mentioned, the personal computer 1, the mobile telephone device 2, the recording and reproducing apparatus 3, and the portable recording and reproducing device 4 have the digital interfaces respectively. The personal computer 1, the mobile telephone device 2, the recording and reproducing apparatus 3, and the portable recording and reproducing device 4 can be connected to each other via the digital interfaces. A virtual file related to contents-representing data or an actual file including contents-representing data may be transmitted among the personal computer 1, the mobile telephone device 2, the recording and reproducing apparatus 3, and the portable recording and reproducing device 4 via the digital interfaces instead of moving a portable recording medium 5 or an optical disc 6 thereamong.

In the case where the personal computer 1 handles contents-representing data of an MP3 format and the portable recording medium 5 accept contents-representing data of an AAC format, the interface between the main portion of the personal computer 1 and the portable recording medium 5 is designed to implement data conversion between MP3 and AAC.

Fig. 8 shows the structure of transmitted data representing one tune (one set of contents) and composing one actual file of contents-representing data. With reference to Fig. 8, one actual file (that is, 1-tune-representing data) has a header, a first block, a second block, and a third block. The header is successively followed by the first, second, and third blocks. The header contains a signal indicating the name of a related file, signals indicating the head addresses of the first, second, and third blocks, and signals indicating the sizes of data in the first, second, and third blocks. The first block contains copyright management information. The copyright management information includes a signal indicating the name of a related set of contents, an ID of the related set of contents, a 1-byte signal indicating a copyright number (a copy permission number) "N", a 1-byte signal indicating a checkout/check-in copyright number, and 100-byte checkout/check-in information. The second block contains auxiliary data indicating the name of a related tune, words in the related tune, and a still picture or pictures. The third block contains main data representing a set of music contents.

Since the 1-byte signal indicating the checkout/check-in copyright number and the 100-byte checkout/check-in information are included in the copyright management information, the transmitted-data structure in Fig. 8 can be used by not only the copy management system in the first embodiment of this invention but also a contents distribution system based on SDMI checkout and check-in. It should be noted that the 1-byte signal indicating the checkout/check-in copyright number and the 100-byte checkout/check-in information may be omitted from the copyright management information.

The 1-byte signal indicating the copyright number "N" may be omitted from the copyright management information. In this case, the checkout/check-in copyright number is converted into the copyright number "N". Specifically, the contents distribution system based on SDMI checkout and check-in limits a destination to which copied contents-representing data are returned. On the other hand, the copy management system in the first embodiment of this invention does not limit a destination to which copied contents-representing data are returned. Accordingly, a checkout/check-in copyright number of 1 or 2 is converted into a copyright number "N" of 1. In addition, a checkout/check-in copyright number of 3 or 4 is converted into a copyright number "N" of 2.

A copyright holder may be able to select one among the copy management system in the first embodiment of this invention and the contents distribution system based on SDMI checkout and check-in. In this case, a system selection flag is added to the transmitted-data structure in Fig. 8.

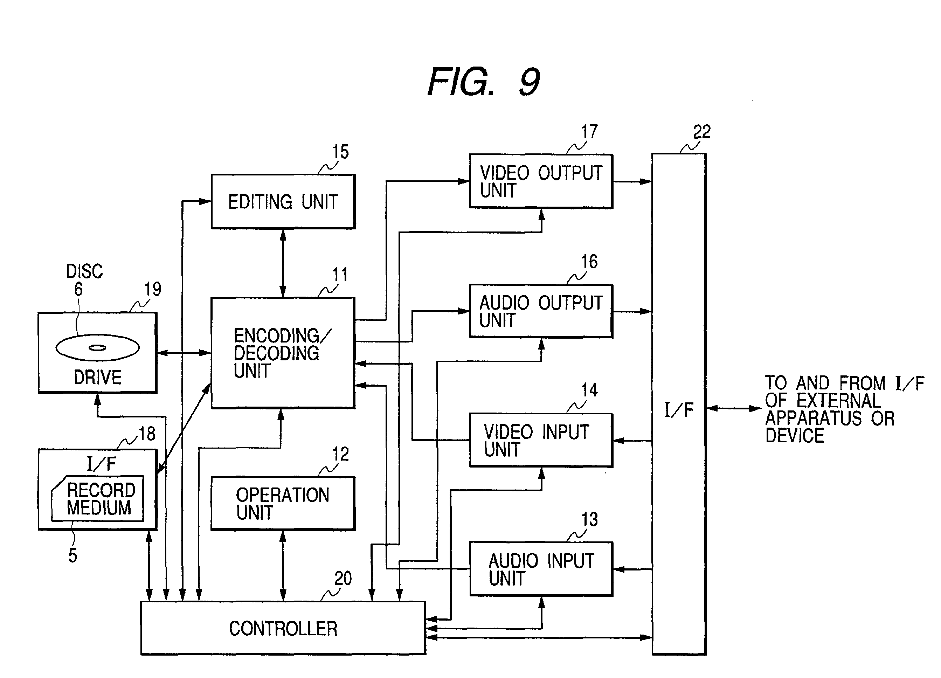

Fig. 9 shows an example of the recording and reproducing apparatus 3. The recording and reproducing apparatus 3 in Fig. 9 includes an encoding/decoding unit 11, an operation unit 12, an audio input unit 13, a video input unit 14, an editing unit 15, an audio output unit 16, a video output unit 17, an interface 18 for a portable recording medium 5, a drive 19 for an optical disc 6, a controller 20, and an interface 22 for wire or wireless communications with another apparatus or device (the personal computer 1, the mobile telephone device 2, or the portable recording and reproducing device 4). The encoding/decoding unit 11 is connected with the audio input unit 13, the video input unit 14, the editing unit 15, the audio output unit 16, the video output unit 17, the interface 18, and the drive 19. The controller 20 is connected with the encoding/decoding unit 11, the operation unit 12, the audio input unit 13, the video input unit 14, the editing unit 15, the audio output unit 16, the video output unit 17, the interface 18, the drive 19, and the interface 22. The interface 22 is connected with the audio input unit 13, the video input unit 14, the audio output unit 16, and the video output unit 17.

The operation unit 12 has various buttons which can be actuated by a user. When the buttons are actuated, the operation unit 12 outputs corresponding command signals to the controller 20. The buttons include a recording button and a playback button. When the recording button is actuated, the operation unit 12 outputs a recording command signal to the controller 20. When the playback button is actuated, the operation unit 12 outputs a playback command signal to the controller 20.

The interface 22 can be connected with a corresponding interface within an external apparatus or device (an audio and video signal generating apparatus, a display-added audio apparatus, the personal computer 1, the mobile telephone device 2, or the portable recording and reproducing device 4). The interface 22 can transmit and receive an audio signal, a video signal, contents-representing data (an actual file), command signals, other signals, and other data and information to and from the external apparatus or device.

The audio input unit 13 can receive an audio signal from the interface 22. The audio input unit 13 converts the audio signal into corresponding audio data, and transmits the audio data to the encoding/decoding unit 11.

The video input unit 14 can receive a video signal from the interface 22. The video signal represents a still picture or pictures. The video input unit 14 converts the video signal into corresponding video data (corresponding still-picture data), and transmits the video data to the encoding/decoding unit 11.

The audio output unit 16 can receive audio data from the encoding/decoding unit 11. The audio output unit 16 converts the audio data into a corresponding audio signal. The audio output unit 16 feeds the audio signal to the interface 22.

The video output unit 17 can receive video data from the encoding/decoding unit 11. The video output unit 17 converts the video data into a corresponding video signal. The video output unit 17 feeds the video signal to the interface 22.

The controller 20 includes a microcomputer, a CPU, a digital signal processor, or a similar device having a combination of an input/output port, a processing section, a RAM (a semiconductor memory), and a ROM. The controller 20 operates in accordance with a control program stored in the ROM or the RAM. The control program is designed to enable the controller 20 to implement operation steps mentioned later.

When receiving a recording command signal from the operation unit 12, the controller 20 controls the interface 22 to receive an audio signal and a video signal (a still-picture signal) from an external apparatus or device. The interface 22 feeds the received audio signal and the received video signal to the audio input unit 13 and the video input unit 14, respectively. The controller 20 controls the audio input unit 13 to convert the audio signal into corresponding audio data. The audio input unit 13 feeds the audio data to the encoding/decoding unit 11. The controller 20 controls the video input unit 14 to convert the video signal into corresponding video data (still-picture data). The video input unit 14 feeds the video data to the encoding/decoding unit 11. The controller 20 generates an actual-file header and copyright management information. The controller 20 feeds the actual-file header and the copyright management information to the encoding/decoding unit 11. The encoding/decoding unit 11 is controlled by the controller 20 to encode the audio data, the video data, the actual-file header, and the copyright management information into a data stream. The encoding/decoding unit 11 feeds the data stream to the interface 18 or the drive 19. The controller 20 controls the interface 18 or the drive 19 to record the data stream on a portable recording medium 5 or an optical disc 6 as an actual file of contents-representing data. As previously mentioned, an example of the portable recording medium 5 includes a flash memory.

The encoding/decoding unit 11 can pass the audio data and the video data to the editing unit 15 as being controlled by the controller 20. The editing unit 15 can edit the audio data and the video data, and return the editing-resultant audio data and the editing-resultant video data to the encoding/decoding unit 11 under the control by the controller 20. In this case, the encoding/decoding unit 11 uses the editing-resultant audio data and the editing-resultant video data in making a data stream.

When receiving a playback command signal from the operation unit 12, the controller 20 controls the interface 18 or the drive 19 to read out a copyright number (a copy permission number) "N" from copyright management information within a designated actual file of contents-representing data on a portable recording medium 5 or an optical disc 6. The controller 20 decides whether or not the read-out copyright number "N" is equal to 0. When the read-out copyright number "N" is equal to 0, the controller 20 fails to implement further steps of playback. Otherwise, the controller 20 controls the interface 18 or the drive 19 to read out a data stream from the designated actual file on the portable recording medium 5 or the optical disc 6. The interface 18 or the drive 19 feeds the read-out data stream to the encoding/decoding unit 11. The encoding/decoding unit 11 is controlled by the controller 20 to decode the data stream into audio data and video data (still-picture data). The encoding/decoding unit 11 feeds the audio data to the audio output unit 16. The encoding/decoding unit 11 feeds the video data to the video output unit 17. The controller 20 controls the audio output unit 16 to converts the audio data into a corresponding audio signal. The audio output unit 16 feeds the audio signal to the interface 22. The controller 20 controls the video output unit 17 to convert the video data into a corresponding video signal (a still-picture signal). The video output unit 17 feeds the video signal to the interface 22. The controller 20 controls the interface 22 to transmit the audio signal and the video signal to an external apparatus or device such as a display-added audio apparatus.

The interface 22 can receive contents-representing data, that is, an actual file, from an external apparatus or device (the personal computer 1, the mobile telephone device 2, or the portable recording and reproducing device 4). The interface 22 feeds the contents-representing data to the controller 20. When receiving a recording command signal from the operation unit 12, the controller 20 feeds the contents-representing data to the interface 18 or the drive 19. The controller 20 controls the interface 18 or the drive 19 to record the contents-representing data on a portable recording medium 5 or an optical disc 6 as an actual file.

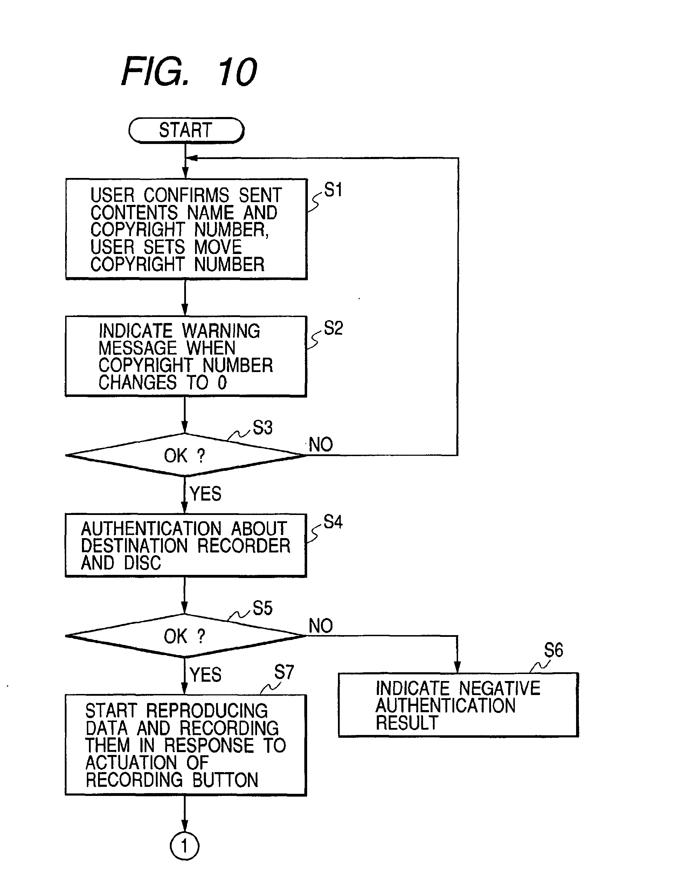

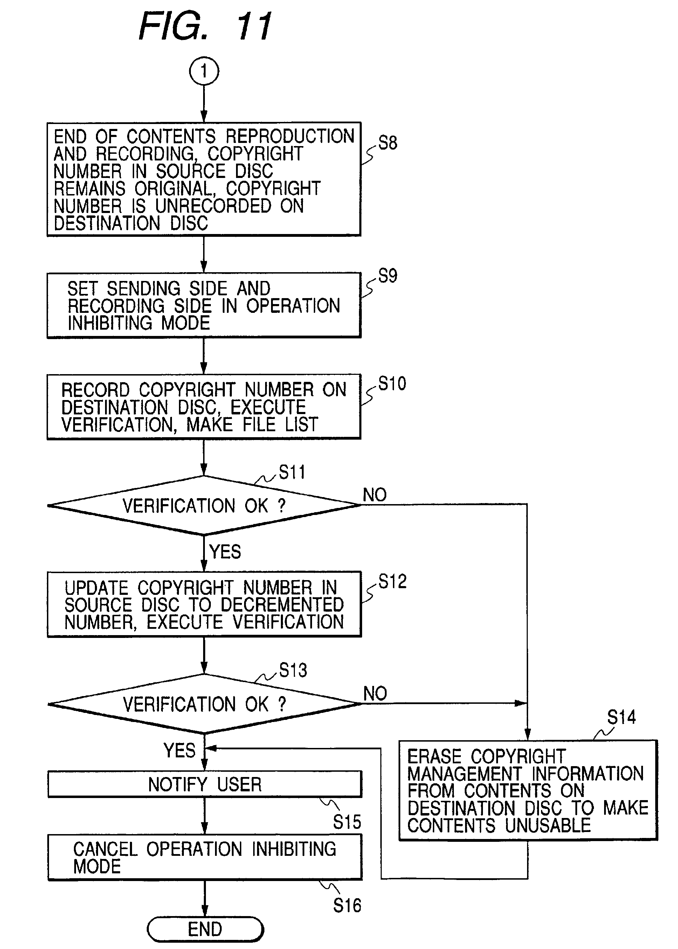

Figs. 10 and 11 show a flow of operation of the copy management system in the first embodiment of this invention which relates to a procedure of copying contents-representing data from the recording medium within the hard disc drive in the personal computer 1 onto an optical disc 6 placed in position with respect to the recording and reproducing apparatus 3. The personal computer 1 and the recording and reproducing apparatus 3 are connected via the digital interfaces therein so that they can communicate with each other. In this case, the personal computer 1 may be replaced by the mobile telephone device 2. The optical disc 6 may be replaced by a portable recording medium 5. The recording and reproducing apparatus 3 may be replaced by the portable recording and reproducing device 4. An actual file of contents-representing data, that is, an actual file including main data and copyright management information, is stored in the recording medium within the hard disc drive in the personal computer 1. The actual file has the structure in Fig. 8.

With reference to Fig. 10, at a first stage S1, a user operates the personal computer 1 so that its display indicates the name of a set of contents and a related copyright number "N" which are represented by the copyright management information in the actual file on the recording medium within the hard disc drive in the personal computer 1. The user confirms the indicated name and the indicated copyright number "N". At the stage S1, the user operates the personal computer 1 to set a copyright number "P" for move.

At a stage S2 following the stage S1, the personal computer 1 subtracts the copyright number (move copyright number) "P" from the copyright number "N". The personal computer 1 decides whether or not the subtraction result is equal to 0. When the subtraction result is equal to 0, the personal computer 1 indicates a warning message on its display. An example of the warning message is "this personal computer will be unable to play back contents, and do you continue this procedure?". The personal computer 1 also indicates an "OK" button and a "NO" button on its display.

At a stage S3 subsequent to the stage S2, the personal computer 1 decides which of the "OK" button and the "NO" button is clicked by the user. When the "OK" button is clicked, the stage S3 is followed by a stage S4. When the "NO" button is clicked, the stage S3 is followed by the stage S1.

At the stage S4, the personal computer 1 communicates with the recording and reproducing apparatus 3 to implement authentication and thereby confirm that the recording and reproducing apparatus 3 and the optical disc 6 therein conform to the SDMI copyright protection standards.

At a stage S5 following the stage S4, the personal computer 1 decides whether the result of the authentication is positive or negative. When the authentication result is positive, that is, when it is confirmed that the recording and reproducing apparatus 3 and the optical disc 6 therein conform to the SDMI copyright protection standards, the stage S5 is followed by a stage S7. On the other hand, when the authentication result is negative, the stage S5 is followed by a stage S6.

At the stage S6, the personal computer 1 indicates the negative authentication result on its display. Then, this copying procedure is terminated.

At the stage S7, the personal computer 1 waits for information from the recording and reproducing apparatus 3 which represents that the recording button on the apparatus 3 is actuated. After being informed that the recording button is actuated, the personal computer 1 communicates with the recording and reproducing apparatus 3 to get a list of the IDs (destination contents IDs) of sets of contents represented by data recorded on the optical disc 6. The personal computer 1 reads out the ID (source contents ID) of the set of contents from the actual file in the recording medium within the hard disc drive. The personal computer 1 collates the source contents ID with the destination contents IDs. When the source contents ID agrees with none of the destination contents IDs, the personal computer 1 transmits the actual file except the copyright number "N" from the recording medium within the hard disc drive to the recording and reproducing apparatus 3 on a copying basis. In addition, the personal computer 1 notifies the recording and reproducing apparatus 3 of the copyright number "P". The recording and reproducing apparatus 3 records the actual file except the copyright number "N" on the optical disc 6. On the other hand, when the source contents ID agrees with one of the destination contents IDs, the personal computer 1 notifies the recording and reproducing apparatus 3 of the copyright number "P" without transmitting the actual file from the recording medium within the hard disc drive to the apparatus 3.

At an initial part of the stage S7, the personal computer 1 and the recording and reproducing apparatus 3 may operate as follows. The recording and reproducing apparatus 3 falls into a ready operation mode or a stand-by operation mode. The personal computer 1 has a playback button. The personal computer 1 waits for information representing that the playback button is actuated. The information representing that the playback button is actuated replaces the information from the recording and reproducing apparatus 3 which represents the actuation of the recording button on the apparatus 3. When the playback button is actuated, the personal computer 1 transmits the information representative of the actuation of the playback button to the recording and reproducing apparatus 3. The recording and reproducing apparatus 3 moves out of the ready operation mode or the stand-by operation mode in response to the information representative of the actuation of the playback button.

At a stage S8 subsequent to the stage S7, the personal computer 1 keeps unchanged the copyright number "N" in the actual file on the recording medium within the hard disc drive. The recording and reproducing apparatus 3 keeps the copyright number "N" unrecorded on the optical disc 6.

At a stage S9 following the stage S8, the personal computer 1 falls into a special operation mode in which the personal computer 1 can not be operated by the user. Also, the recording and reproducing apparatus 3 falls into a special operation mode in which the apparatus 3 can not be operated by the user.

At a stage S10 subsequent to the stage S9, the recording and reproducing apparatus 3 records a signal of the copyright number "P" in the actual file on the optical disc 6 as a signal of the copyright number "N". The recording and reproducing apparatus 3 verifies the after-recorded copyright management information in the actual file on the optical disc 6. Specifically, the correct copyright management information including the copyright number "P" is prepared in the semiconductor memory within the recording and reproducing apparatus 3 before the signal of the copyright number "P" is recorded. Immediately after the signal of the copyright number "P" is recorded, the recording and reproducing apparatus 3 reads out the copyright management information from the actual file in the optical disc 6. To implement the verification, the recording and reproducing apparatus 3 compares the read-out copyright management information with the copyright management information in the semiconductor memory. When the read-out copyright management information is the same as the copyright management information in the semiconductor memory, the result of the verification is positive. Otherwise, the result of the verification is negative.

At the stage S10, the recording and reproducing apparatus 3 updates or newly generates a list of the IDs of sets of contents represented by data recorded on the optical disc 6. The recording and reproducing apparatus 3 records information representative of the ID list on the optical disc 6. Data pieces representing respective music tunes and stored in random areas of the optical disc 6 can be managed according to the ID list. In the case where the actual file newly recorded on the optical disc 6 lacks an ID, the recording and reproducing apparatus 3 generates a suitable ID of the set of contents represented by the newly-recorded actual file. The recording and reproducing apparatus 3 records a signal representative of the generated ID in the copy management information within the newly-recorded actual file on the optical disc 6. For example, the generated ID results from combining a signal representative of the name of a related tune and a signal representative of the present date and time.

At a stage S11 subsequent to the stage S10, the recording and reproducing apparatus 3 decides whether the result of the verification at the stage S10 is positive or negative. When the verification result is positive, the stage S11 is followed by a stage S12. On the other hand, when the verification result is negative, the stage S11 is followed by a stage S14. The recording and reproducing apparatus 3 notifies the personal computer 1 whether the result of the verification at the stage S10 is positive or negative.

At the stage S12, the personal computer 1 calculates a new copyright number "N" equal to the original copyright number "N" minus the move copyright number "P". The personal computer 1 records a signal of the new copyright number "N" over the signal of the original copyright number "N" in the actual file on the recording medium within the hard disc drive. Accordingly, the original copyright number "N" in the actual file on the recording medium within the hard disc drive is updated to the new copyright number "N". The personal computer 1 verifies the updating-resultant copyright management information in the actual file on the recording medium within the hard disc drive. Specifically, the correct copyright management information including the new copyright number "N" is prepared in the semiconductor memory within the personal computer 1 before the updating of the copyright number "N" in the actual file on the recording medium within the hard disc drive. Immediately after the updating of the copyright number "N" in the actual file on the recording medium within the hard disc drive, the personal computer 1 reads out the copyright management information from the actual file in the recording medium within the hard disc drive. To implement the verification, the personal computer 1 compares the read-out copyright management information with the copyright management information in the semiconductor memory. When the read-out copyright management information is the same as the copyright management information in the semiconductor memory, the result of the verification is positive. Otherwise, the result of the verification is negative.

At a stage S13 subsequent to the stage S12, the personal computer 1 decides whether the result of the verification at the stage S12 is positive or negative. When the verification result is positive, the stage S13 is followed by a stage S15. On the other hand, when the verification result is negative, the stage S13 is followed by the stage S14. The personal computer 1 notifies the recording and reproducing apparatus 3 whether the result of the verification at the stage S12 is positive or negative.

At the stage S14, the recording and reproducing apparatus 3 sets the copyright number "N" in the actual file on the optical disc 6 to 0. The copyright number "N" being 0 prohibits the playback of contents represented by data in the related actual file. Alternatively, the recording and reproducing apparatus 3 may erase the copyright management information from the actual file in the optical disc 6. The stage S14 is followed by the stage S15.

At the stage S15, at least one of the personal computer 1 and the recording and reproducing apparatus 3 indicates the results of the verifications at the stages S11 and S13 on its display. Thus, the user is notified of the verification results.

At a stage S16 subsequent to the stage S15, the personal computer 1 moves out of the special operation mode in which the personal computer 1 can not be operated by the user. Also, the recording and reproducing apparatus 3 moves out of the special operation mode in which the apparatus 3 can not be operated by the user. Then, this copying procedure is terminated.

A procedure of copying contents-representing data from the recording medium within the hard disc drive in the personal computer 1 onto a portable recording medium 5 placed in position with respect to the recording and reproducing apparatus 3 is similar to the copying procedure in Figs. 10 and 11 except that the portable recording medium 5 replaces the optical disc 6.

A procedure of copying contents-representing data from the recording medium within the hard disc drive in the personal computer 1 onto a portable recording medium 5 placed in position with respect to the portable recording and reproducing device 4 is similar to the copying procedure in Figs. 10 and 11 except that the portable recording medium 5 and the portable recording and reproducing device 4 replace the optical disc 6 and the recording and reproducing apparatus 3 respectively.

A procedure of copying contents-representing data from the internal memory within the mobile telephone device 2 onto an optical disc 6 placed in position with respect to the recording and reproducing apparatus 3 is similar to the copying procedure in Figs. 10 and 11 except that the mobile telephone device 2 replaces the personal computer 1.

A procedure of copying contents-representing data from the internal memory within the mobile telephone device 2 onto a portable recording medium 5 placed in position with respect to the recording and reproducing apparatus 3 is similar to the copying procedure in Figs. 10 and 11 except that the mobile telephone device 2 and the portable recording medium 5 replace the personal computer 1 and the optical disc 6 respectively.

A procedure of copying contents-representing data from the internal memory within the mobile telephone device 2 onto a portable recording medium 5 placed in position with respect to the portable recording and reproducing device 4 is similar to the copying procedure in Figs. 10 and 11 except that the mobile telephone device 2, the portable recording medium 5, and the portable recording and reproducing device 4 replace the personal computer 1, the optical disc 6, and the recording and reproducing apparatus 3 respectively.

### Second Embodiment

A second embodiment of this invention is similar to the first embodiment thereof except for points mentioned later. Each of the personal computer 1, the mobile telephone device 2, the recording and reproducing apparatus 3, and the portable recording and reproducing device 4 can act as a player for a portable recording medium 5 or an optical disc 6. Each of the personal computer 1, the mobile telephone device 2, the recording and reproducing apparatus 3, and the portable recording and reproducing device 4 operates in accordance with a control program.

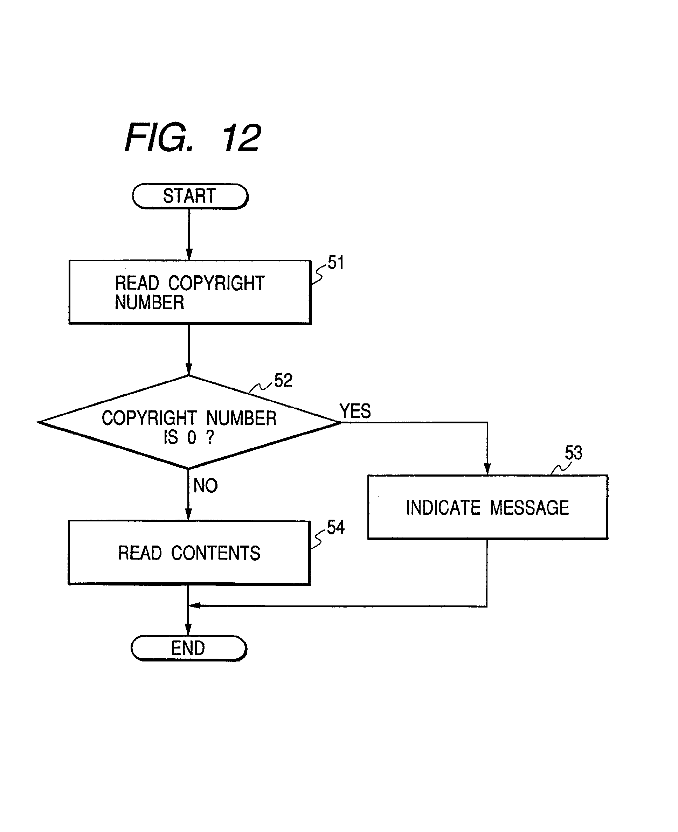

Fig. 12 is a flowchart of a player-related segment of the control program. As shown in Fig. 12, a first step 51 of the program segment reads out a signal representative of a copyright number (a copy permission number) from a requested actual file in a portable recording medium 5 or an optical disc 6.

A step 52 following the step 51 compares the read-out copyright number with 0. When the read-out copyright number is equal to 0, the program advances from the step 52 to a step 53. Otherwise, the program advances from the step 52 to a step 54.

The step 53 controls a display to indicate a message as "contents can not be played back". After the step 53, the current execution cycle of the program segment ends.

The steps 52 and 53 cooperate to inhibit the playback of contents represented by the requested actual file when the read-out copyright number is equal to 0.

The step 54 reads out main data and auxiliary data from the requested actual file in the portable recording medium 5 or the optical disc 6 for playback purposes. After the step 54, the current execution cycle of the program segment ends.

The personal computer 1 can copy an actual file of contents-representing data from the recording medium within the hard disc drive onto a portable recording medium 5 or an optical disc 6. Also, the mobile telephone device 2 can copy an actual file of contents-representing data from the internal memory onto a portable recording medium 5. The control program for each of the personal computer 1 and the mobile telephone device 2 has a copying-related segment.

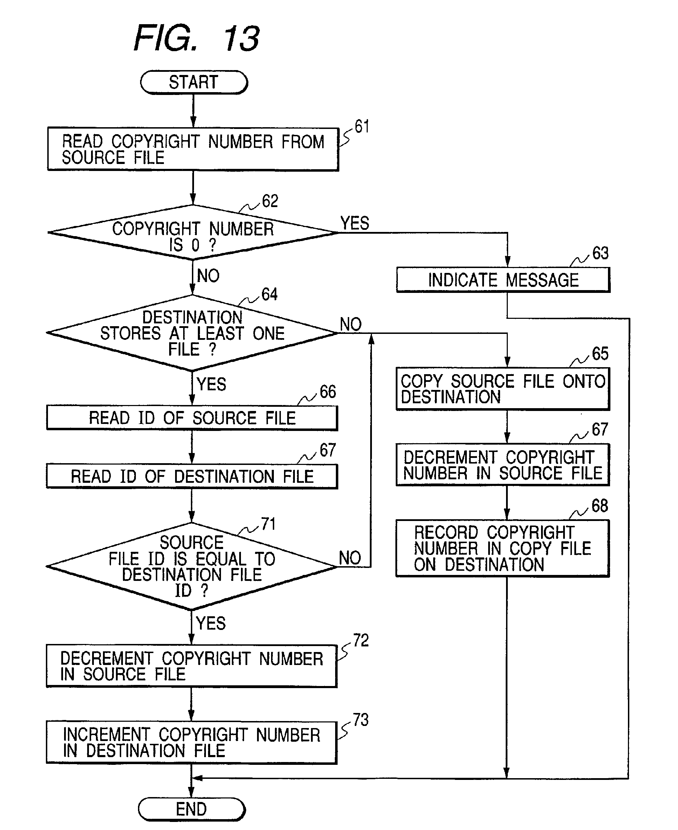

Fig. 13 is a flowchart of the copying-related segment of the control program. As shown in Fig. 13, a first step 61 of the program segment reads out a signal representative of a copyright number (a copy permission number) from a requested actual file in a source recording medium (the recording medium within the hard disc drive in the personal computer 1 or the internal memory in the mobile telephone device 2).

A step 62 following the step 61 compares the read-out copyright number with 0. When the read-out copyright number is equal to 0, the program advances from the step 62 to a step 63. Otherwise, the program advances from the step 62 to a step 64.

The step 63 controls a display to indicate a message as "contents can not be copied". After the step 63, the current execution cycle of the program segment ends.

The steps 62 and 63 cooperate to inhibit the read-out of the requested actual file from the source recording medium when the read-out copyright number is equal to 0.

The step 64 checks whether or not a destination recording medium (a portable recording medium 5 or an optical disc 6) stores at least one actual file. When the destination recording medium does not store any actual file, the program advances from the step 64 to a step 65. Otherwise, the program advances from the step 64 to a step 66.

The step 65 copies the requested actual file except the copyright-number signal from the source recording medium onto the destination recording medium.

A step 67 following the step 65 decrements, by "P", the copyright number in the actual file on the source recording medium where "P" denotes an integer equal to 1 or greater which can be set by a user.

A step 68 subsequent to the step 67 records a signal indicative of a copyright number of "P" in the copy actual file on the destination recording medium to complete the copy actual file. After the step 68, the current execution cycle of the program segment ends.

The step 66 reads out the ID from the actual file in the source recording medium. A step 70 following the step 66 reads out the ID or IDs from the actual file or files in the destination recording medium.

A step 71 subsequent to the step 70 compares the ID read out from the source recording medium with the ID or IDs read out from the destination recording medium. When the ID read out from the source recording medium is different from the ID read out from the destination recording medium or when the ID read out from the source recording medium is identical with none of the IDs read out from the destination recording medium, the program advances from the step 71 to the step 65. Otherwise, the program advances from the step 71 to a step 72.

The step 72 decrements, by "P", the copyright number in the actual file on the source recording medium. A step 73 following the step 72 increments, by "P", the copyright number in the same actual file on the destination recording medium. After the step 73, the current execution cycle of the program segment ends.

## Claims

1. A method of managing the copying of data representing contents, comprising the steps of:
sending, to a user, contents and a copyright number given from a copyright holder to the user regarding the contents as virtual contents files whose number is equal to the copyright number; and
in cases where the user copies the contents from a source recording medium to a destination recording medium, moving the virtual contents files from the source recording medium and erasing the virtual contents files from the source recording medium.

2. A method of managing the copying of data representing contents, comprising the steps of:
sending, to a user, contents and a copyright number given from a copyright holder to the user regarding the contents; and
in cases where the user copies the contents from a source recording medium to a destination recording medium, moving the virtual contents files and the copyright number from the source recording medium as virtual contents files whose number is equal to the copyright number, and erasing the virtual contents files from the source recording medium.

3. A method as recited in claim 1, wherein the moving step comprises decrementing a copyright number in the source recording medium, and incrementing a copyright number in the destination recording medium.

4. A recording and reproducing apparatus comprising:
means for moving a set of contents from a source recording medium to a destination recording medium as virtual contents files whose number is equal to a copyright number given from a copyright holder to a user;
means for erasing the virtual contents files from the source recording medium; and
means for changing the copyright number in accordance with a direction of moving the virtual contents files and a number of the moved virtual contents files.

5. A recording and reproducing apparatus of claim 4 which comprises a server for copying the set of contents onto another recording medium.

6. A recording and reproducing apparatus of claim 4 which comprises a portable recording medium.

7. A recording and reproducing apparatus of claim 4 which comprises an apparatus for recording and reproducing information on and from an optical disc.

8. A reproducing apparatus comprising:
means for moving a set of contents from a source recording medium to a destination recording medium as virtual contents files whose number is equal to a copyright number given from a copyright holder to a user;
means for erasing the virtual contents files from the source recording medium; and
means for inhibiting playback of contents related to the virtual contents files when the copyright number is equal to 0.

9. A method of managing the copying of data representing contents, comprising the steps of:
sending, to a user, (1) first contents, (2) an ID of the first contents, and (3) a copyright number given from a copyright holder to the user regarding the first contents as virtual contents files whose number is equal to the copyright number;
in cases where the user copies the first contents from a source recording medium to a destination recording medium, collating the ID of the first contents with an ID of second contents already recorded on the destination recording medium;
when the ID of the first contents is different from the ID of the second contents, moving the first contents, the ID of the first contents, and the copyright number; and
when the ID of the first contents is equal to the ID of the second contents, incrementing a copyright number in the destination recording medium without moving the first contents to move and erase the virtual contents files from the source recording medium.

10. A method as recited in claim 9, further comprising the step of, in cases where the first contents lacks an ID, adding an ID to the first contents and recording the ID-added first contents on the destination recording medium.

11. A method as recited in claim 9, further comprising the steps of:
recording a list of IDs of recorded contents on the destination recording medium; and
collating the ID of the first contents with the IDs in the list at a time of copying.

12. A recording and reproducing apparatus comprising:
means for sending, to a user, (1) first contents, (2) an ID of the first contents, and (3) a copyright number given from a copyright holder to the user regarding the first contents as virtual contents files whose number is equal to the copyright number;
means for, in cases where the user copies the first contents from a source recording medium to a destination recording medium, collating the ID of the first contents with an ID of second contents already recorded on the destination recording medium;
means for, when the ID of the first contents is different from the ID of the second contents, moving the first contents, the ID of the first contents, and the copyright number; and
means for, when the ID of the first contents is equal to the ID of the second contents, incrementing a copyright number in the destination recording medium without moving the first contents to move and erase the virtual contents files from the source recording medium.

13. A recording and reproducing apparatus as recited in claim 12, further comprising means for, in cases where the first contents lacks an ID, adding an ID to the first contents and recording the ID-added first contents on the destination recording medium.

14. A recording and reproducing apparatus as recited in claim 12, further comprising:
means for recording a list of IDs of recorded contents on the destination recording medium; and
means for collating the ID of the first contents with the IDs in the list at a time of copying.

15. A recording and reproducing apparatus as recited in claim 12, wherein the destination recording medium comprises an optical disc.

16. A copy management system comprising:
first means for reading out an identification signal from a file in a source recording medium;
second means for reading out an identification signal from a file in a destination recording medium;
third means for deciding whether or not the identification signal read out by the first means and the identification signal read out by the second means are equal;
fourth means for, when the third means decides that the identification signal read out by the first means and the identification signal read out by the second means are equal, decrementing a copy permission number in the file in the source recording medium by a predetermined number and incrementing a copy permission number in the file in the destination recording medium by the predetermined number;
fifth means for inhibiting read-out of the file from the source recording medium when the copy permission number in the file in the source recording medium is equal to 0; and
sixth means for inhibiting read-out of the file from the destination recording medium when the copy permission number in the file in the destination recording medium is equal to 0.

17. A copy management system as recited in claim 16, further comprising:
seventh means for, when the third means decides that the identification signal read out by the first means and the identification signal read out by the second means are not equal, copying the file except the copy permission number from the source recording medium onto the destination recording medium to record a copy file on the destination recording medium;
eighth means for, in cases where the seventh means executes the copying, decrementing the copy permission number in the file in the source recording medium by a preset number; and
ninth means for, in cases where the seventh means executes the copying, setting a copy permission number in the copy file in the destination recording medium to the preset number.
